# EUROPEAN PATENT SPECIFICATION

(11) **EP 4 283 116 B1**
(45) Date of publication and mention of the grant of the patent: **06.05.2026**
(21) Application number: 22174996.3
(22) Date of filing: 24.05.2022
(51) Int. Cl.: F03D 1/06, F03D 80/30

(54) **A WIND TURBINE BLADE WITH AN IMPROVED LIGHTNING PROTECTING SYSTEM**
WINDTURBINENSCHAUFEL MIT VERBESSERTEM BLITZSCHUTZSYSTEM
PALE D'ÉOLIENNE DOTÉE D'UN SYSTÈME DE PROTECTION CONTRE LA FOUDRE AMÉLIORÉ

(43) Date of publication of application: 29.11.2023
(73) Proprietor: LM Wind Power A/S, 6000 Kolding (DK)
(72) Inventor: BAVILOLIAIE, Mahdi, 6000 Kolding (DK); STEWART, Ian, Eastleigh, SO53 4SE (GB); HANSEN, Lars Bo, 6000 Kolding (DK)
(74) Representative: COPA Copenhagen Patents

(56) References cited:
- EP-A1- 3 597 911
- WO-A1-2021/165404
- US-A1- 2013 065 471
- US-A1- 2014 234 600
- US-B2- 11 215 167

## Description

### Field of the Invention

The present invention relates to a lightning protection system (LPS) for a wind turbine blade. In particular, the present invention relates to the use of a conducting fabric as part of an LPS system.

### Background of the Invention

Wind power provides a clean and environmentally friendly source of energy. Wind turbines usually comprise a tower, generator, gearbox, nacelle, and one or more rotor blades. The wind turbine blades capture kinetic energy of wind using known airfoil principles. Modern wind turbines may have rotor blades that exceed 100 meters in length.

Wind turbine blades are usually manufactured by forming two shell parts or shell halves (i.e. a pressure side shell half and a suction side shell half) from layers of woven fabric or fibres and resin. Spar caps, which are also called main laminates, are placed or integrated in the shell halves and may be combined with shear webs or spar beams to form structural support for the blade. Spar caps or main laminates may be joined to, or integrated within, the inside of the suction and pressure halves of the shell. The shell halves of the wind turbine blade are typically manufactured as fibre composite structures by means of VARTM (vacuum assisted resin transfer moulding), where liquid polymer, also called resin, is filled into the blade mould cavity, in which a fibre lay-up has been inserted together with the spar cap and typically a sandwich core material, and where a vacuum is generated in the mould cavity, hereby drawing in the polymer. The polymer can be thermoset or thermoplastics. Typically, the mould cavity is covered with a resilient vacuum bag. By generating a vacuum, the liquid resin can be drawn in and fill the mould cavity with the fibre material contained herein. In most cases, the resin applied is polyester or epoxy, and typically the fibre lay-up is based on glass fibres and/or carbon fibres. Usually, a shear web is arranged in between the first spar cap and the second spar cap. Each shear web may comprise a web body, a first web foot flange at a first end of the web body, and a second web foot flange at a second end of the web body.

As wind turbines and wind turbine blades increase in size, the risk of a lightning strike hitting the wind turbine blades of the wind turbine increases. It is therefore of increasing interest to provide wind turbines and in particular wind turbine blades with lightning protecting measures. It is known to provide blades for wind turbines with lightning receptors, in electric connection with a down conductor that is able to connect a lightning current to ground. A lightning strike directly into the laminate may cause damage to a blade comprising electrically conductive fibres, as they would conduct the current and thereby would develop a substantial amount of heat.

Thus, it is of increasing importance to provide a lightning protection system (LPS) and ways of integrating a lightning protection system, which protects components of the wind turbine blade from being damaged by lightning strikes. This is even more important, if the wind turbine blade comprises conductive parts, such as carbon fibre reinforced spar caps. Typically, a lightning protection system comprises at least one lightning receptor located at or near the tip end of the blade that is electrically connected to the down conductor. The current is transferred from the lightning receptor or lightning receptors via cables to the down conductor and ground. However, when a lightning strikes a lightning receptor, there is a substantial risk of arcs (i.e. current jumping) into e.g. the spar caps due to the presence of conductive carbon fibres, which may cause damage to the blade. Thus, LPS systems typically also comprise means to equalize a voltage build-up between the spar caps and down conductor in order to avoid current jumping by establishing an electrical connection between the LPS system and the spar caps.

Spar caps are made from composite materials, often with carbon fabrics embedded in a cured resin matrix. While the carbon fibres in the fabric act as a conductive material the cured resin has insulating properties. The carbon fibres for spar caps are typically made from carbon rovings or tows, wherein the rovings or tows are either stitched and/or weaved together to form the fabric. Such fabrics may be in the form of precured elements, such as pultruded carbon planks.

An additional carbon fibre fabric can be used for providing the potential equalising connection between the carbon fibres of the spar caps, e.g. the pultruded carbon planks, and the LPS system. Stitching and/or weaving are not desirable in terms of conductivity for this additional carbon fabric, as it introduces some disturbance in the fabric and creates small pockets that may be filled with insulating resin, thus reducing the contact surface between the potential equalising carbon fabrics and the carbon fibres of the spar cap. The conductivity of the fabric is also reduced by introduction of unwanted nonconductive materials such as stitching yarn. Thus, it remains a challenge to obtain a proper electrical connection between the LPS system and the spar caps in order to equalize any voltage build-up arising during a lightning strike. In order to obtain an optimal electrical connection between the lightning receptors in the LPS system and the spar caps, the conductivity at the interface of the spar caps should be increased by increasing the contact area between the potential equalising carbon fabric and the spar cap, e.g. by increasing the number of conductive fibres (i.e. a high fibre volume fraction (FVF)). However, a high fibre volume fraction is hard to achieve using stitched and/or weaved fabrics, as the stitching process separates the carbon tows into bundles leaving room for formation of insulating resin rich pockets, when resin is infused to form the spar cap.

EP 3 597 911 A1 discloses a wind turbine blade comprising a support element having first fibers being electrically conductive, and a fiber material having second fibers being electrically conductive, wherein the fiber material has a free portion and an overlapping portion which is at least partially attached and electrically connected to the support element, wherein an extension direction of the second fibers changes along an extension path of the second fibers, wherein a first angle is provided between the second fibers in the overlapping portion and the first fibers, wherein a second angle is provided between the second fibers in the free portion and the first fibers, and wherein the second angle is larger than the first angle.

The present invention sets out to solve the problem of providing an improved electrical connection between the spar caps and the lightning receptors in an LPS system to equalize any voltage build-up leading to current jumping and eventually blade damage.

It is therefore an object of the present invention to provide an LPS system having an improved electric connection between the lightning receptor and the spar cap. It is another object of the present invention to provide a lightning protection system for a wind turbine blade that reduces lightning strike damage to the blade, in particular to the spar cap.

### Summary of the invention

The present disclosure relates to an LPS system for a wind turbine blade comprising an improved electrical connection between the one or more lightning receptors and the spar cap(s) by use of high conductive fabrics.

Thus, in a first aspect the present disclosure relates to a lightning protection system for a wind turbine blade including a pressure side and a suction side, and a leading edge and a trailing edge with a chord having a chord length extending therebetween, the wind turbine blade extending in a spanwise direction between a root end and a tip end, the lightning protection system comprising
at least one lightning receptor arranged at an outer surface of the blade and a down conductor extending within the blade,
a first carbon fibre reinforced spar cap extending substantially in the spanwise direction of the wind turbine blade and having a chamfered tip end and an opposing chamfered root end, the first spar cap being arranged inside the blade along the pressure side,
a second carbon fibre reinforced spar cap extending substantially in the spanwise direction of the wind turbine blade and having a chamfered tip end and an opposing chamfered root end, the second spar cap being arranged inside the blade along the suction side,
wherein an electric connection between the at least one lightning receptor and the chamfered tip end and/or root end of the first and/or second spar cap comprises a conductive fabric, said conductive fabric comprising unidirectional carbon fibres bonded by an adhesive, wherein the fabric has a thickness of 0.01-0.5 mm and a fibre volume fraction (FVF) of at least 50%,
wherein the electric connection between the at least one lightning receptor and the chamfered tip end and/or root end of the first and/or second spar cap further comprises a metallic mesh.

Similarly, the present disclosure relates to a wind turbine blade including a pressure side and a suction side, and a leading edge and a trailing edge with a chord having a chord length extending therebetween, the wind turbine blade extending in a spanwise direction between a root end and a tip end, wherein the wind turbine blade comprises:
a lightning protection system comprising at least one lightning receptor arranged at an outer surface of the blade and a down conductor extending within the blade,
a first carbon fibre reinforced spar cap extending substantially in the spanwise direction of the wind turbine blade and having a chamfered tip end and an opposing chamfered root end, the first spar cap being arranged inside the blade along the pressure side, and
a second carbon fibre reinforced spar cap extending substantially in the spanwise direction of the wind turbine blade and having a chamfered tip end and an opposing chamfered root end, the second spar cap being arranged inside the blade along the suction side,
   wherein an electric connection between the at least one lightning receptor and the chamfered tip end and/or root end of the first and/or second spar cap comprises a conductive fabric, said conductive fabric comprising unidirectional carbon fibres bonded by an adhesive, wherein the fabric has a thickness of 0.05-0.3 mm and a fibre volume fraction (FVF) of at least 50%.

The present inventors found that the electrical connection between the spar caps and the LPS system could be improved by use of a thin layer of a conductive fabric configured at a chamfered tip end and/or root end of the first and/or second spar cap. The conductive fabric was found to greatly improve the conductivity at the interface of the spar cap by having a high fibre volume fraction (FVF) of at least 50%, preferably at least 55 %, more preferably at least 60 %, which allows the fabric to establish an improved electrical connection with the carbon fibres present in the spar cap. Typically, the FVF is in the range of 50-75 %, preferably in the range of 60-70 %. A conductive fabric with a fibre volume fraction (FVF) of at least 50% may be manufactured by gluing the fibres together by means of an adhesive thereby circumventing the need for stitching and/or weaving and minimizing the presence of insulating pockets in the fabric and further avoiding nonconductive stitching yarn. The inventors found that it was essential that the fabric did not exceed 0.3 mm in thickness, as a thicker fabric hampered the penetration of resin during resin infusion due to the high fibre volume fraction. It is accordingly also understood that the fabric is preferably provided without stitching and weaving. The resin is only supplied in a fraction that allows the fabric to be arranged as a single fabric during the manufacture of the wind turbine blade. Accordingly, it is also understood that the characteristics may refer to the carbon fabric, when applying the carbon fabric to the spar cap during manufacturing of the wind turbine blade. In other preferred embodiments, the FVF is at least 70%, preferably at least 75%, more preferably at least 80%, and even more preferably more than 85%, and even at least 90%. The fabric thickness of 0.05-0.3 mm is measured under vacuum (i.e. VARTM). Thus, at atmospheric pressure the thickness may be twice as much (i.e. 0.1-0.6 mm).

The conductive fabric may be arranged on various positions of the first and/or second spar cap. In a preferred embodiment, the conductive fabric is arranged on at least part of the chamfered tip end and/or root end of the first and/or second spar cap. In another preferred embodiment, the conductive fabric is arranged such that it substantially covers all of the chamfered tip end and/or root end of the first and/or second spar cap. The chamfered tip end and/or root end were found to be particular advantageous for establishing an electrical connection with the spar cap due to the more exposed carbon fibres present in these regions compared to the rest of the spar cap.

In a preferred embodiment, the LPS system for the wind turbine blade includes a plurality of lightning receptors to mitigate the risk of a lightning strike into the laminate. At least one of the pluralities of lightning receptors are positioned at or near the tip end of the blade. Preferably, 2-4 lightning receptors are present in the tip region of the blade where the risk of lightning strikes is highest. The tip end lightning receptor is preferably arranged at or in the immediate vicinity of the tip of the blade. The tip end lightning receptor may be located on the outer surface of the blade, or it may take the form of a solid metal tip conformal with the shape of the blade with the tip end region. The tip end lightning receptor may also be conformal with the shape of the tip end. In some embodiments, the tip end lightning receptor is implemented as a solid carbon fibre tip. In the present context, the tip end/region extends spanwise from the tip end of the blade and comprises up to 10% of the blade length. In another embodiment, the lightning receptor(s) in the tip of the blade is/are electrically connected to the down conductor and the spar caps, wherein the connection to the spar cap comprises a conductive fabric as described herein. Preferably, the lightning receptors in the tip end of the blade are only electrically connected to the down conductor.

In another embodiment, the down conductor comprises a cable made of or comprising an electrically conductive material, such as copper or aluminium, and extending within the shell body to the root end of the blade. The down conductor is preferably connected to ground via the rotor hub so that current from a lightning strike can be safely conducted from the tip end lightning receptor to the down conductor and finally to ground. However, in other embodiments, a spark gap is provided between the down conductor and the rotor hub. The down conductor may be electrically insulated at least up to the shell body of the blade and preferably at least partially through the shell body. Thus, the risk for damaging lightning strikes or flashovers is minimised even further. Albeit a lightning current is captured by a lightning receptor in the tip end of the blade and conducted to the down conductor and into the earth, the conductive fibres in the spar cap may cause the current to jump into the laminate and hence cause damage thereto.

Thus, in a highly preferred embodiment, a plurality of lightning receptors is configured to be exposed along either, or along both, of the pressure side or the suction side at or near the spar cap in addition to the lightning receptor(s) present in the tip end of the blade. Preferably, the lightning receptors at or near the spar cap are configured in the surface of the blade on either chordal side of the spar cap, e.g. in the surface of the blade in a region extending between the spar and the trailing edge of the blade. In another embodiment, the lightning receptor(s) at or near the spar cap is/are configured to be exposed at the surface of the blade in a region extending between the spar and the leading edge of the blade. The lightning receptor(s) at or near the spar cap extend through the blade skin and is/are electrically connected to the down conductor and the spar cap, and the potential equalising connection to the spar cap comprises the conductive fabric. Thus, at least one of the lightning receptors configured at or near the spar cap is electrically connected to the spar cap in addition to the down conductor in order to equalize any voltage build-up and minimize the risk of current jumping. Preferably, all of the lightning receptors configured at or near the spar cap are electrically connected to the spar cap in addition to the down conductor. In another embodiment, the conductive fabric may be used to establish an improved electrical connection between the spar cap and any of the lightning receptors including lightning receptors in the tip end of the blade. Preferably, the conductive fabric is used to improve the electrical connection between the lightning receptors located at or near the spar. The lightning receptor(s) at or near the spar cap may be any type of lightning receptor commonly used in LPS systems comprising a conductive material, such as carbon nanotubes or a metal. However, preferably the lightning receptor(s) is/are metallic bolt(s).

In a preferred embodiment, the conductive fabric is used to establish an electrical connection with the at least one lightning receptor present at or near the chamfered tip end and/or root end of the first and/or second spar cap. In some embodiments, a plurality of lightning receptors may be present at or near the chamfered tip end and/or root end of the first and/or second spar cap such as e.g. 2-10 receptors. In some embodiments, 1-5 receptors are present at or near the chamfered tip end of the first and/or second spar cap. In some embodiments, 1-5 receptors are present at or near the chamfered root end of the first and/or second spar cap. Preferably, lightning receptors are present at both the root end and tip end of the first and/or second spar cap. Preferably, each of the receptors present at or near the chamfered tip end and/or root end of the first and/or second spar cap are electrically connected to the spar cap using the conductive fabric or conductive fabrics. One or more conductive fabrics may be positioned on the chamfered tip end and/or root end of the first and/or second spar cap depending on the number of lightning receptors that are to be electrically connected with the spar cap. Preferably, at least one lightning receptor is positioned at or near the chamfered tip end and/or root end of the first and/or second spar cap and is electrically connected to the first and/or second spar cap via the conductive fabric.

More preferably, at least one lightning receptor is positioned at or near the chamfered tip end and at least one lightning receptor is positioned at the chamfered root end of the first and/or second spar cap, wherein each of the at least one lightning receptors are electrically connected to the first and/or second spar cap via the conductive fabric. More preferably, at least one lightning receptor is positioned at or near the chamfered tip end and at least one lightning receptor is positioned at the chamfered root end of the first and second spar cap, wherein each of the at least one lightning receptors are electrically connected to the first and/or second spar cap via the conductive fabric.

Preferably, 3-5 lightning receptors are configured at or near the chamfered tip end and 3-5 lightning receptors are configured at or near the opposing chamfered root end of the first spar cap. Likewise, preferably 3-5 lightning receptors are configured at or near the chamfered tip end and 3-5 lightning receptors are configured at or near the opposing chamfered root end of the second spar cap. Preferably, all of the lightning receptors are electrically connected to the respective first or second spar cap via the conductive fabric in order to minimize the risk of arcs (i.e. current jumping).

In any of the above embodiments, the electric connection between the at least one lightning receptor and the chamfered tip end and/or root end of the first and/or second spar cap further comprises at least one metallic mesh, preferably a copper mesh. A metallic mesh may in some embodiments be configured beneath the lightning receptor, configured in the skin of the blade, and extend to the conductive fabric on the spar cap.

This ensures a particular effective means for equalizing any difference in electric potential between the spar caps and down conductor.

Preferably, the conductive fabric is arranged in between at least part of the metallic mesh and at least part of the chamfered tip end and/or root end of the first and/or second spar cap. Preferably, the conductive fabric is in contact with at least part of a metallic mesh and at least part of the chamfered tip end and/or root end of the first and/or second spar cap. In a preferred embodiment, unidirectional carbon fibres in the conductive fabric are arranged in a spanwise direction between the chamfered tip end and root end of the first and/or second spar cap. This ensures that the carbon fibres are substantially aligned with the carbon fibres in the spar cap leading to an improved electrical connection.

In a particularly preferred embodiment, the first spar cap may further be electrically connected to the second spar cap by at least one conductor, preferably a metal conductor such as a cable comprising a metal conductor, as an equipotential connection between the first and the second spar cap. This can be achieved by having both spar caps electrically connected to the down-conductor. The equipotential connection can equipotentialize a voltage build-up between the first and the second spar cap.

In a preferred embodiment, the conductor between the first and second spar cap for the equipotential connection extends from the pressure side spar cap to the suction side spar cap, e.g. substantially in the flapwise direction of the wind turbine blade. In a preferred embodiment, said conductor is connected to the first and second spar cap with respective anchor blocks (outside the spar caps) and bolts, each bolt being received in a respective anchoring block. Thus, a first anchor block is preferably arranged at the inside facing surface of the blade shell, and a second anchor block is preferably arranged at the inside facing surface of an opposite side of the blade shell, wherein a first bolt extends from the opposing outside facing surface of the blade shell, being received, for example in a threaded connection in the first anchor block. Similarly, a second bolt may extend from the opposing outside facing surface of the blade shell, being received, for example in a threaded connection in the second anchor block. The first and second bolts may be electrically connected to the conductor for the equipotential connection.

In a second, non-claimed aspect, the disclosure relates to a non-woven and non-stitched conductive fabric for use in a lightning protection system, wherein the fabric comprises unidirectional carbon fibres bonded by an adhesive (or tackifier), wherein the fabric has a thickness of 0.05-0.3 mm and a fibre volume fraction (FVF) of at least 50%. Preferably the adhesive in the conductive fabric is thermoplastic adhesive, preferably a polyester, such as a bisphenolic polyester. An example of adhesive is the polyester marketed under the name NEOXIL 940 such as NEOXIL 940 PMX, NEOXIL 940 KS 1 and NEOXIL 940 HF 2B, all manufactured by DSM Composite Resins AG. Alternatively, the adhesive may be a hotmelt adhesive or based on a prepreg resin. The conductive fabrics may be manufactured from carbon large fibre tows of e.g. 12K, 24K or 50K using tow-spreading technology such as the FUKUI method, wherein large fibre tows are spread by application of air into smaller fibre bundles, whereafter the thermoplastic resin is applied as adhesive. The smaller fibre bundles are applied resin and passed through heating rollers and cooling rollers to obtain a thin sheet of conductive fabric without the need for weaving and/or stitching. These embodiments improve the contact area between the carbon fibres of the spar cap and the carbon fibres of the conductive fabric (for potential equalisation). Further, by avoiding stitching and weaving, the large contact area is maintained, because the risk of formation of insulating resin rich areas is minimised.

In a third aspect, the present disclosure relates to a method of manufacturing a shell half structure with an LPS system for a wind turbine blade, the wind turbine blade having a profiled contour including a pressure side and a suction side, and a leading edge and a trailing edge with a chord having a chord length extending therebetween, the wind turbine blade extending in a spanwise direction between a root end and a tip end, the method comprises:
arranging one or more first layers of fibre fabrics, on the surface of a mould to form a first shell half structure,
arranging one or more second layers of carbon fibres in a mould to form a spar cap having a chamfered tip end and an opposing chamfered root end,
arranging at least one conductive fabric, comprising unidirectional carbon fibres bonded by an adhesive, wherein the fabric has a thickness of 0.05-0.3 mm and a fibre volume fraction (FVF) of at least 50%, on at least part of the chamfered tip end and/or opposing chamfered root end of the spar cap,
arranging at least one metallic mesh on at least part of the conductive fabric,
consolidating the one or more first layers of fibre fabrics, one or more second layers of carbon fibres, the conductive fabric and the metallic mesh.

The consolidating step may include infusion of the lay-up by a resin or a binding agent, preferably by VARTM. In a preferred embodiment, the unidirectional carbon fibres are arranged in a spanwise direction between the chamfered tip end and root end of the first and/or second spar cap in order to substantially align the fibres in the conductive fabric with the fibres in the first and/or second spar cap. Preferably, the carbon fibres in the mould used to form the spar cap are carbon pultruded carbon planks.

As used herein, the term "tip end lightning receptor" means a lightning receptor which is arranged within the tip end region of the blade, the tip end region extending spanwise from the tip end of the blade and comprising up to 10% of the blade length.

As used herein, the term "spanwise" is used to describe the orientation of a measurement or element along the blade from its root end to its tip end. In some embodiments, spanwise is the direction along the longitudinal axis and longitudinal extent of the wind turbine blade.

### Description of the Invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 shows a schematic perspective view of a wind turbine blade according to the present invention,
Fig. 5 shows a schematic view of a conductive fabric according to the invention.

### Detailed description of the figures

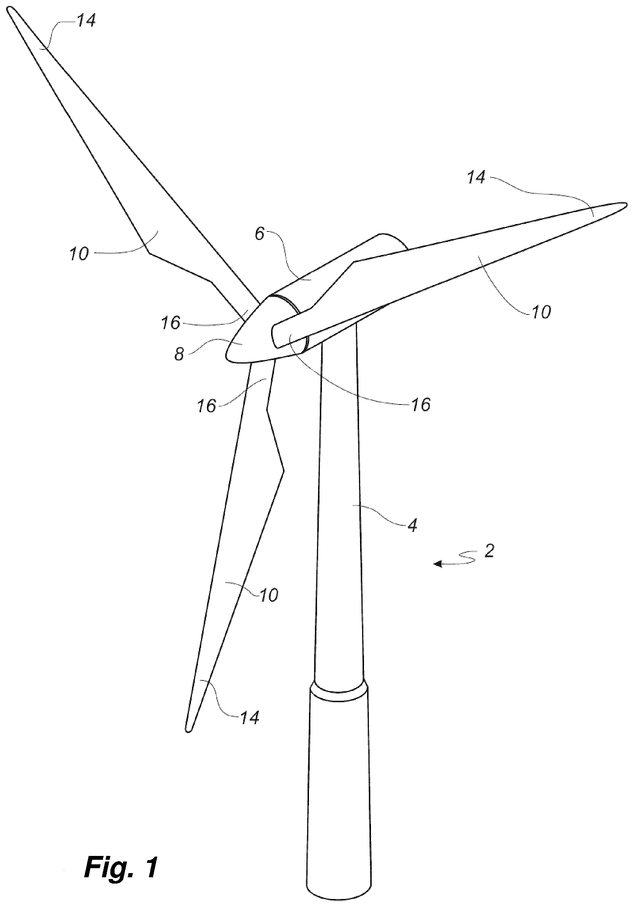

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

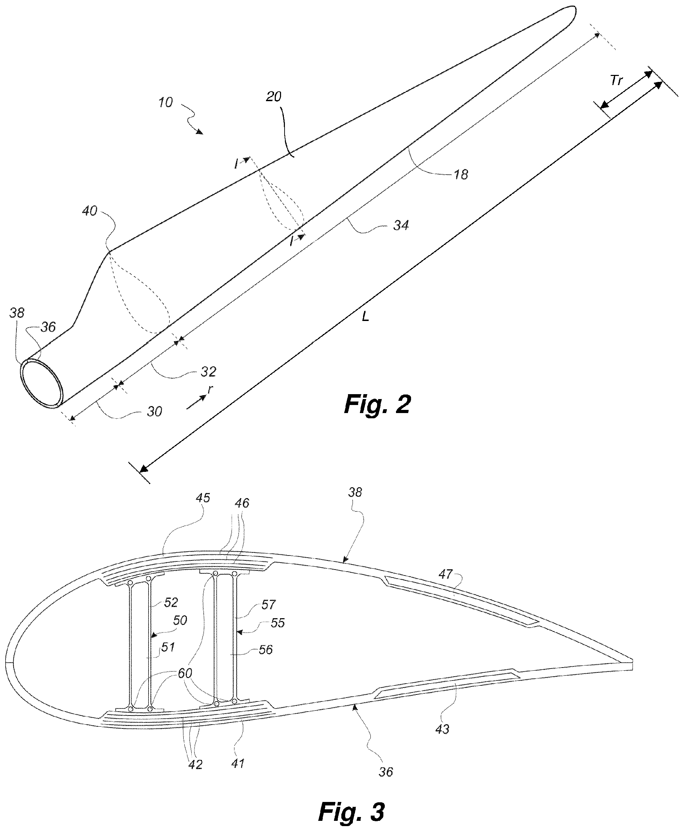

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34. Fig. 2 also illustrates the longitudinal extent L, length or longitudinal axis of the blade, and the tip end region of the blade, the tip end region Tr extending spanwise from the tip end of the blade and comprising 10% of the blade length.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

Fig. 3 shows a schematic view of a cross section of the blade along the line I-I shown in Fig. 2. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 36 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The blade shells 36, 38 may comprise further fibre-reinforcement at the leading edge and the trailing edge. Typically, the shell parts 36, 38 are bonded to each other via glue flanges.

In a preferred embodiment, the fibre layers 42, 46 are formed by pre-cured elements, such as carbon fibre pultrusion planks.

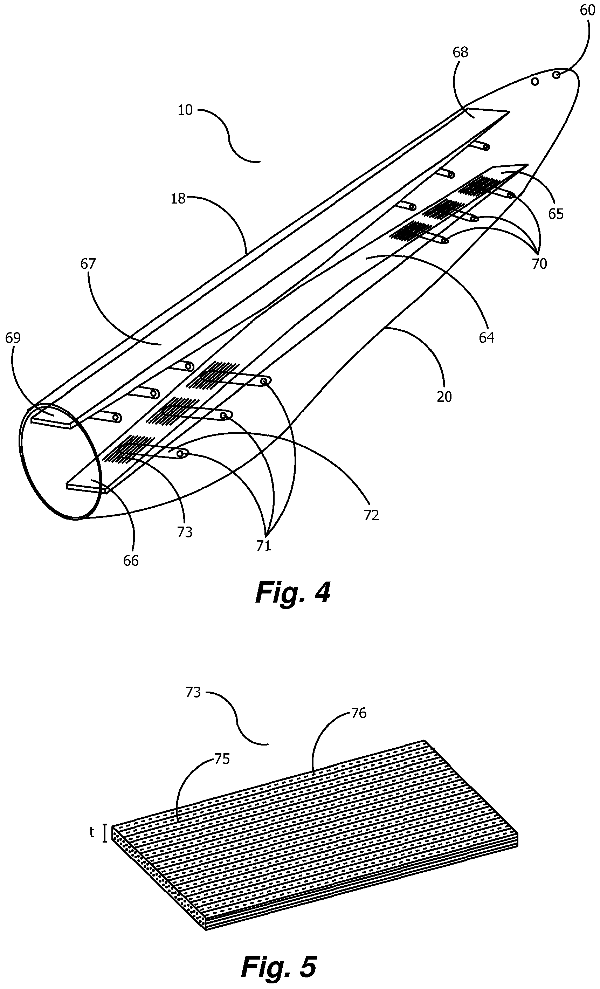

Fig. 4 shows a schematic view of a wind turbine blade 10 comprising an LPS system according to an embodiment of the invention. The wind turbine blade has a pressure side and a suction side, and a leading edge 18 and a trailing edge 20 with a chord having a chord length extending therebetween, the wind turbine blade extending in a spanwise direction between a root end and a tip end. The blade has a first carbon fibre reinforced spar cap 64 having a chamfered tip end 65 and an opposing chamfered root end 66, the first spar cap being arranged inside the blade along the pressure side. The blade has a second carbon fibre reinforced spar cap 67 having a chamfered tip end 68 and an opposing chamfered root end 69, the second spar cap being arranged inside the blade along the suction side. For simplicity, the wind turbine blade has been depicted without the shear webs that connect the first spar cap 64 and the second spar cap 67.

As mentioned above, the spar cap may be formed from pre-cured elements, such as carbon fibre pultrusion planks. The end faces of the pultrusion planks may be chamfered in order to provide the chamfered tip end 68 and the chamfered root end 69.

In the shown embodiment, the first carbon fibre reinforced spar cap 64 has three lightning receptors 70 configured at the outer surface of the blade near a chamfered tip end 65 and three lightning receptors 71 configured at the outer surface of the blade near an opposing chamfered root end 66. Likewise, the second carbon fibre reinforced spar cap 67 has three lightning receptors configured at the outer surface of the blade near a chamfered tip end 68 and three lightning receptors configured at the outer surface of the blade near an opposing chamfered root end 69. However, a different number of receptors are also contemplated. Each of the lightning receptors are electrically connected to the first or second spar cap respectively by a metallic mesh 72 and a conductive fabric 73. The conductive fabric comprises unidirectional carbon fibres bonded by an adhesive, wherein the fabric has a thickness of 0.05-0.3 mm and a fibre volume fraction (FVF) of at least 50%. The lightning receptors are configured at a trailing edge region near the chamfered tip end or root end of the first and/or second spar cap. The lighting receptors near the chamfered tip end and near the opposing chamfered root end of the first and second spar cap are further electrically connected to the down conductor (not shown). The blade 10 further comprises two lightning receptors 60 at the tip end of the blade, which are electrically connected to the down conductor (not shown).

Further, the spar caps 64 and 67 may also have a mutual potential equalisation. This may be achieved by an electrical connection, such as a cable, extending from one of the receptors on the pressure side to the down-conductor, and a corresponding electrical connection from one of the receptors on the suction side to the down-conductor.

Fig. 5 shows a schematic view of a conductive fabric 73 comprising parallel carbon fibres 75 held together by an adhesive/tackifier 76. The adhesive makes stitching and/or weaving redundant and hence improves the conductivity of the fabric, as no disturbances in the fabric are introduced by stitching and/or weaving. This effectively minimizes the amount of resin rich pockets and allows for a higher FVF which improves the conductivity of the fabric. The fabric has a thickness (t) of 0.05-0.3 mm. A maximum thickness of 0.3 mm was found to be essential to allow proper wetting of the carbon fibres during resin infusion due the dense structure of the fabric. The conductive fabrics may be manufactured from carbon large fibre tows of e.g. 12K, 24K or 50K using tow-spreading technology, such as the FUKUI method, wherein large fibre tows are spread by application of air into smaller fibre bundles, whereafter the thermoplastic resin is applied as adhesive. This allows for manufacture of thin fabrics having a thickness as low as 0.04 mm.

The fabric as shown in Fig. 5 improves the contact area between the carbon fibres of the spar cap and the carbon fibres of the conductive fabric (for potential equalisation). Further, by avoiding stitching and weaving, the large contact area is maintained, because the risk of formation of insulating resin rich areas is minimised. Thus, the functionality of the LPS system is improved over prior art systems.

The invention is not limited to the embodiments described herein and may be modified or adapted without departing from the scope of the present invention.

### List of reference numerals

- 4: tower
- 6: nacelle
- 8: hub
- 10: blades
- 14: blade tip
- 16: blade root
- 18: leading edge
- 20: trailing edge
- 30: root region
- 32: transition region
- 34: airfoil region
- 36: pressure side shell part
- 38: suction side shell part
- 40: shoulder
- 41: spar cap
- 42: fibre layers
- 43: sandwich core material
- 45: spar cap
- 46: fibre layers
- 47: sandwich core material
- 50: first shear web
- 51: sandwich core material
- 52: skin layers
- 55: second shear web

- 60: tip end lightning receptor
- 64: first carbon fibre reinforced spar cap
- 65: tip end of first spar cap
- 66: root end of first spar cap
- 67: second carbon fibre reinforced spar cap
- 68: tip end of second spar cap
- 69: root end of second spar cap
- 70: lightning receptor at chamfered tip end of first spar cap
- 71: lightning receptor at chamfered root end of first spar cap
- 72: metallic mesh
- 73: conductive fabric
- 75: carbon fibres
- 76: adhesive (i.e. tackifier)
- t: thickness
- L: length
- r: distance from hub
- R: rotor radius
- Tr: tip end region

## Claims

1. A lightning protection system for a wind turbine blade (10) including a pressure side (36) and a suction side (38), and a leading edge (18) and a trailing edge (20) with a chord having a chord length extending therebetween, the wind turbine blade extending in a spanwise direction between a root end and a tip end, the lightning protection system comprising
at least one lightning receptor (70, 71) arranged at an outer surface of the blade and a down conductor extending within the blade,
a first carbon fibre reinforced spar cap (64) extending substantially in the spanwise direction of the wind turbine blade and having a chamfered tip end (65) and an opposing chamfered root end (66), the first spar cap being arranged inside the blade along the pressure side,
a second carbon fibre reinforced spar cap (67) extending substantially in the spanwise direction of the wind turbine blade and having a chamfered tip end (68) and an opposing chamfered root end (69), the second spar cap being arranged inside the blade along the suction side,
wherein an electric connection between the at least one lightning receptor and the chamfered tip end and/or root end of the first and/or second spar cap comprises a conductive fabric (73), said conductive fabric comprising unidirectional carbon fibres bonded by an adhesive, **characterized in that** the fabric has a thickness of 0.01-0.5 mm and a fibre volume fraction (FVF) of at least 50%,
wherein the electric connection between the at least one lightning receptor and the chamfered tip end and/or root end of the first and/or second spar cap further comprises a metallic mesh (72).

2. A lightning protection system according to claim 1, wherein the thickness of the fabric (73) is 0.025-0.4 mm, preferably 0.05-0.3 mm.

3. A lightning protection system according to claim 1 or 2, wherein the fibre volume fraction of the conductive fabric (73) is at least 55 %, such as at least 60 %, preferably at least 65%, more preferably at least 70%, yet more preferably at least 75%, even more preferably 80%, and preferably at least 85%, or at least 90%.

4. A lightning protection system according to any of claims 1-3, wherein the conductive fabric (73) is provided without any stitching material and without weaving.

5. A lightning protection system according to any of the preceding claims, wherein the conductive fabric (73) is arranged in between at least part of the metallic mesh (72) and at least part of the chamfered tip end and/or root end of the first and/or second spar cap.

6. A lightning protection system according to any of the preceding claims, wherein the unidirectional carbon fibres in the conductive fabric are arranged in a spanwise direction between the chamfered tip end and root end of the first and/or second spar cap.

7. A method of manufacturing a shell half structure with a lightning protection system (LPS) for a wind turbine blade, the wind turbine blade (10) having a profiled contour including a pressure side (36) and a suction side (38), and a leading edge and a trailing edge with a chord having a chord length extending therebetween, the wind turbine blade extending in a spanwise direction between a root end and a tip end, the method comprises:
arranging one or more first layers of fibre fabrics, on the surface of a mould to form a first shell half structure,
arranging one or more second layers of carbon fibres in a mould to form a spar cap having a chamfered tip end and an opposing chamfered root end,
arranging at least one conductive fabric (73), comprising unidirectional carbon fibres bonded by an adhesive, wherein the carbon fabric has a thickness of 0.05-0.3 mm and a fibre volume fraction (FVF) of at least 50%, on at least part of the chamfered tip end and/or opposing chamfered root end of the spar cap,
arranging at least one metallic mesh (72) on at least part of the conductive fabric,
consolidating the one or more first layers of fibre fabrics, one or more second layers of carbon fibres, the conductive fabric and the metallic mesh.

8. A method according to claim 7, wherein the unidirectional carbon fibres in the conductive fabric (73) are arranged in a spanwise direction between the chamfered tip end and root end of the first and/or second spar cap.

9. A method according to claim 7 or 8, wherein the spar cap comprises precured elements, such as pultruded carbon fibre planks, comprising the unidirectional carbon fibres.

## Patentansprüche

1. Blitzschutzsystem für ein Rotorblatt (10) einer Windkraftanlage, das eine Druckseite (36) und eine Saugseite (38) einschließt, und eine Vorderkante (18) und eine Hinterkante (20), die eine Sehnenlänge aufweist, die sich dazwischen erstreckt, wobei sich das Rotorblatt der Windkraftanlage in einer Spannrichtung zwischen einem Wurzelende und einem Spitzenende erstreckt, wobei das Blitzschutzsystem Folgendes umfasst:
mindestens einen Blitzrezeptor (70, 71), der an einer Außenfläche des Rotorblatts angeordnet ist, und einen Ableiter, der sich innerhalb des Rotorblatts erstreckt,
eine erste kohlefaserverstärkte Balkenkappe (64), die sich im Wesentlichen in Spannrichtung des Rotorblatts der Windkraftanlage erstreckt und ein abgeschrägtes Spitzenende (65) und ein gegenüberliegendes abgeschrägtes Wurzelende (66) aufweist, wobei die erste Balkenkappe entlang der Druckseite innerhalb des Rotorblatts angeordnet ist,
eine zweite kohlefaserverstärkte Balkenkappe (67), die sich im Wesentlichen in Spannrichtung des Rotorblatts der Windkraftanlage erstreckt und ein abgeschrägtes Spitzenende (68) und ein gegenüberliegendes abgeschrägtes Wurzelende (69) aufweist, wobei die zweite Balkenkappe entlang der Saugseite innerhalb des Rotorblatts angeordnet ist,
wobei eine elektrische Verbindung zwischen dem mindestens einen Blitzrezeptor und dem abgeschrägten Spitzenende und/oder Wurzelende der ersten und/oder zweiten Balkenkappe ein leitfähiges Gewebe (73) umfasst, wobei das leitfähige Gewebe unidirektionale Kohlenstofffasern umfasst, die durch einen Klebstoff gebunden sind, **dadurch gekennzeichnet, dass** das Gewebe eine Dicke von 0,01 bis 0,5 mm und einen Faservolumenanteil (FVF) von mindestens 50 % aufweist,
wobei die elektrische Verbindung zwischen dem mindestens einen Blitzrezeptor und dem abgeschrägten Spitzenende und/oder Wurzelende der ersten und/oder zweiten Holmkappe ferner ein Metallgeflecht (72) umfasst.

2. Blitzschutzsystem nach Anspruch 1, wobei die Dicke des Gewebes (73) 0,025-0,4 mm, bevorzugt 0,05-0,3 mm beträgt.

3. Blitzschutzsystem nach Anspruch 1 oder 2, wobei der Faservolumenanteil des leitfähigen Gewebes (73) mindestens 55 % beträgt, wie zum Beispiel mindestens 60 %, bevorzugt mindestens 65 %, bevorzugter mindestens 70 %, noch bevorzugter mindestens 75 %, noch bevorzugter 80 % und bevorzugt mindestens 85 % oder mindestens 90 %.

4. Blitzschutzsystem nach einem der Ansprüche 1 bis 3, wobei das leitfähige Gewebe (73) ohne jegliches Nahtmaterial und ohne Weben bereitgestellt ist.

5. Blitzschutzsystem nach einem der vorstehenden Ansprüche, wobei das leitfähige Gewebe (73) zwischen mindestens einem Teil des Metallgewebes (72) und mindestens einem Teil des abgeschrägten Spitzenendes und/oder Wurzelendes der ersten und/oder zweiten Holmkappe angeordnet ist.

6. Blitzschutzsystem nach einem der vorstehenden Ansprüche, wobei die unidirektionalen Kohlenstofffasern in dem leitfähigen Gewebe in einer Spannrichtung zwischen dem abgeschrägten Spitzenende und dem Wurzelende der ersten und/oder zweiten Holmkappe angeordnet sind.

7. Verfahren zur Herstellung einer Schalenhalbstruktur mit einem Blitzschutzsystem (LPS) für ein Rotorblatt einer Windkraftanlage, wobei das Rotorblatt der Windkraftanlage (10) eine profilierte Kontur aufweist, die eine Druckseite (36) und eine Saugseite (38) einschließt, und eine Vorderkante und eine Hinterkante mit einer Sehnenlänge, aufweist, die sich dazwischen erstreckt, wobei sich das Rotorblatt der Windkraftanlage in Spannrichtung zwischen einem Wurzelende und einem Spitzenende erstreckt, wobei das Verfahren Folgendes umfasst:
Anordnen einer oder mehrerer erster Schichten von Fasergeweben auf der Oberfläche einer Form, sodass eine erste Schalenhalbstruktur gebildet wird,
Anordnen einer oder mehrerer zweiter Kohlenstofffaserschichten in einer Form, um eine Holmkappe zu bilden, die ein abgeschrägtes Spitzenende und ein gegenüberliegendes abgeschrägtes Wurzelende aufweist,
Anordnen von mindestens einem leitfähigen Gewebe (73), umfassend unidirektionale Kohlenstofffasern, die durch einen Klebstoff gebunden sind, wobei das Kohlenstoffgewebe eine Dicke von 0,05-0,3 mm und einen Faservolumenanteil (FVF) von mindestens 50 % auf mindestens einem Teil des angefasten Spitzenendes und/oder dem gegenüberliegenden angefasten Wurzelende der Holmkappe aufweist,
Anordnen mindestens eines Metallgewebes (72) auf mindestens einem Teil des leitfähigen Gewebes,
Verfestigen der ersten oder mehrerer Schichten von Fasergeweben, einer oder mehrerer zweiter Schichten von Kohlefasern, des leitfähigen Gewebes und des Metallgewebes.

8. Verfahren nach Anspruch 7, wobei die unidirektionalen Kohlenstofffasern in dem leitfähigen Gewebe (73) in einer Spannrichtung zwischen dem abgeschrägten Spitzenende und dem Wurzelende der ersten und/oder zweiten Holmkappe angeordnet sind.

9. Verfahren nach Anspruch 7 oder 8, wobei die Holmkappe vorgehärtete Elemente, wie pultrudierte Kohlefaserbretter, umfasst, die die unidirektionalen Kohlefasern umfassen.

## Revendications

1. Système de protection contre la foudre pour une pale d'éolienne (10) incluant un côté pression (36) et un côté aspiration (38), et un bord d'attaque (18) et un bord de fuite (20) avec une corde présentant une longueur de corde s'étendant entre eux, la pale d'éolienne s'étendant dans une direction transversale entre une extrémité d'emplanture et une extrémité de pointe, le système de protection contre la foudre comprenant :
au moins un récepteur de foudre (70, 71) agencé sur une surface externe de la pale et un conducteur descendant s'étendant à l'intérieur de la pale,
un premier capuchon (64) de longeron renforcé par des fibres de carbone s'étendant sensiblement dans la direction transversale de la pale d'éolienne et présentant une extrémité de pointe (65) chanfreinée et une extrémité d'emplanture (66) chanfreinée opposée, le premier capuchon de longeron étant agencé à l'intérieur de la pale le long du côté pression,
un deuxième capuchon (67) de longeron renforcé par des fibres de carbone s'étendant sensiblement dans la direction transversale de la pale d'éolienne et présentant une extrémité de pointe (68) chanfreinée et une extrémité d'emplanture (69) chanfreinée opposée, le deuxième capuchon de longeron étant agencé à l'intérieur de la pale le long du côté aspiration,
dans lequel une connexion électrique entre l'au moins un récepteur de foudre et l'extrémité de pointe et/ou l'extrémité d'emplanture chanfreinée du premier et/ou deuxième capuchon de longeron comprend un tissu (73) conducteur, ledit tissu conducteur comprenant des fibres de carbone unidirectionnelles liées par un adhésif, **caractérisé en ce que** le tissu présente une épaisseur de 0,01 à 0,5 mm et une fraction volumique de fibre (FVF) d'au moins 50 %,
dans lequel la connexion électrique entre l'au moins un récepteur de foudre et l'extrémité de pointe et/ou l'extrémité d'emplanture chanfreinée du premier et/ou deuxième capuchon de longeron comprend en outre un maillage métallique (72).

2. Système de protection contre la foudre selon la revendication 1, dans lequel l'épaisseur du tissu (73) est de 0,025 à 0,4 mm, préférablement de 0,05 à 0,3 mm.

3. Système de protection contre la foudre selon la revendication 1 ou la revendication 2, dans lequel la fraction volumique de fibres du tissu (73) conducteur est d'au moins 55 %, telle qu'au moins 60 %, préférablement au moins 65 %, plus préférablement au moins 70 %, encore plus préférablement au moins 75 %, encore plus préférablement 80 % et préférablement au moins 85 % ou au moins 90 %.

4. Système de protection contre la foudre selon l'une quelconque des revendications 1 à 3, dans lequel le tissu (73) conducteur est prévu sans aucun matériau de couture et sans tissage.

5. Système de protection contre la foudre selon l'une quelconque des revendications précédentes, dans lequel le tissu (73) conducteur est agencé entre au moins une partie du maillage métallique (72) et au moins une partie de l'extrémité de pointe et/ou de l'extrémité d'emplanture chanfreinée du premier et/ou deuxième capuchon de longeron.

6. Système de protection contre la foudre selon l'une quelconque des revendications précédentes, dans lequel les fibres de carbone unidirectionnelles dans le tissu conducteur sont agencées dans une direction transversale entre l'extrémité de pointe et l'extrémité d'emplanture chanfreinées du premier et/ou deuxième capuchon de longeron.

7. Procédé de fabrication d'une demi-structure de coque avec un système de protection contre la foudre (LPS) pour une pale d'éolienne, la pale d'éolienne (10) présentant un contour profilé incluant un côté pression (36) et un côté aspiration (38), et un bord d'attaque et un bord de fuite avec une corde présentant une longueur de corde s'étendant entre eux, la pale d'éolienne s'étendant dans une direction transversale entre une extrémité d'emplanture et une extrémité de pointe, le procédé comprend :
l'agencement d'une ou plusieurs premières couches de tissus de fibres, sur la surface d'un moule pour former une première demi-structure de coque,
l'agencement d'une ou plusieurs deuxièmes couches de fibres de carbone dans un moule pour former un capuchon de longeron présentant une extrémité chanfreinée et une extrémité de racine chanfreinée opposée,
l'agencement d'au moins un tissu (73) conducteur, comprenant des fibres de carbone unidirectionnelles liées par un adhésif, dans lequel le tissu de carbone présente une épaisseur de 0,05 à 0,3 mm et une fraction volumique de fibres (FVF) d'au moins 50 %, sur au moins une partie de l'extrémité de pointe chanfreinée et/ou de l'extrémité d'emplanture chanfreinée opposée du capuchon de longeron,
l'agencement d'au moins un maillage métallique (72) sur au moins une partie du tissu conducteur,
la consolidation des une ou plusieurs premières couches de tissus de fibres, d'une ou plusieurs deuxièmes couches de fibres de carbone, du tissu conducteur et du maillage métallique.

8. Procédé selon la revendication 7, dans lequel les fibres de carbone unidirectionnelles dans le tissu (73) conducteur sont agencées dans une direction transversale entre l'extrémité de pointe et l'extrémité d'emplanture chanfreinées du premier et/ou deuxième capuchon de longeron.

9. Procédé selon la revendication 7 ou la revendication 8, dans lequel la coiffe de longeron comprend des éléments prédurcis, tels que des planches de fibres de carbone pultrudées, comprenant les fibres de carbone unidirectionnelles.
